# FASCICULE DE BREVET EUROPEEN

(11) **EP 1 887 855 B1**
(45) Date de publication et mention de la délivrance du brevet: **26.11.2008**
(21) Numéro de dépôt: 06743779.8
(22) Date de dépôt: 10.05.2006
(51) Int. Cl.: A01K 1/12

(54) **AMENAGEMENT D'UN PASSAGE D'HOMME POUR TRAITE A L'INTERIEURE D'UNE PLATEFORME CIRCULAIRE ROTATIVE**
BEREITSTELLUNG EINES MELKPERSONENDURCHGANGS IN EINEM KARUSSELL
PROVIDING A HUMAN-SIZED MILKING PASSAGEWAY INSIDE A CIRCULAR TURNTABLE

(30) Priorité: 12.05.2005 FR 0504763
(43) Date de publication de la demande: 20.02.2008
(73) Titulaire: S.A. Binet, 50160 Guilberville (FR)
(72) Inventeur: BINET, Jean-Yves, F-50160 Guilberville (FR); BEAUSIRE, Fabrice, F-50420 Beuvrigny (FR); LEBARILLIER, Stephane, F-50160 Guilberville (FR)
(74) Mandataire: Maillet, Alain
(86) Numéro de dépôt international: PCT/FR2006/001032
(87) Numéro de publication internationale: WO 2006/120337

(56) Documents cités:
- WO-A-00/74472
- FR-A- 2 730 604
- FR-A- 2 758 941
- US-A- 3 934 551

## Description

La présente invention concerne un dispositif aménagé, mis en place dans les stalles pour salle de traite à plate-forme circulaire tournante, communément appelé Manège de traite, équipée de stalles permettant une traite sur le coté ou par l'arrière des vaches. Cette invention s'applique dans le cas où la traite se fait à l'intérieur de cette plate-forme, dans la fosse de traite, située en contrebas de celle-ci, sur une hauteur d'environ un mètre. L'invention permet ainsi, une libre circulation de l'extérieure du Manège sur la plate-forme, puis dans la fosse, et vice-versa, sans aucun obstacle à franchir.

Dans l'état de la technique actuelle, l'accessibilité de l'extérieur vers l'intérieur de la plate-forme et inversement se fait soit :
1-Par un passage souterrain (4), aménagé dans les fondations du local de traite, passant sous la dalle du chemin de roulement de la plate-forme, permettant ainsi un accès sécurisé dans la fosse de traite (3). Toutefois, cette solution est très peu utilisée du fait de son coût trop élevé sur l'ensemble du projet de construction.
2-Par le passage à travers les stalles de contention des bovins, dans des conditions très acrobatiques et peu sécurisantes, des personnes souhaitant se rendre à l'intérieur du Manège de traite (---Entrée sur la plate-forme par la porte d'accès des bovins (10 & 11), ---en passant sous ou entre les barres de la contention avant (5), puis ouverture des barres de contention arrière des bovins prévues à cet effet pour les franchir et descente dans la fosse par un escalier fixe au sol à partir de la plate-forme en rotation.) La sortie se fait inversement et tout aussi dangereusement dans les mêmes conditions. Voir aussi le document FR-A-2730604.

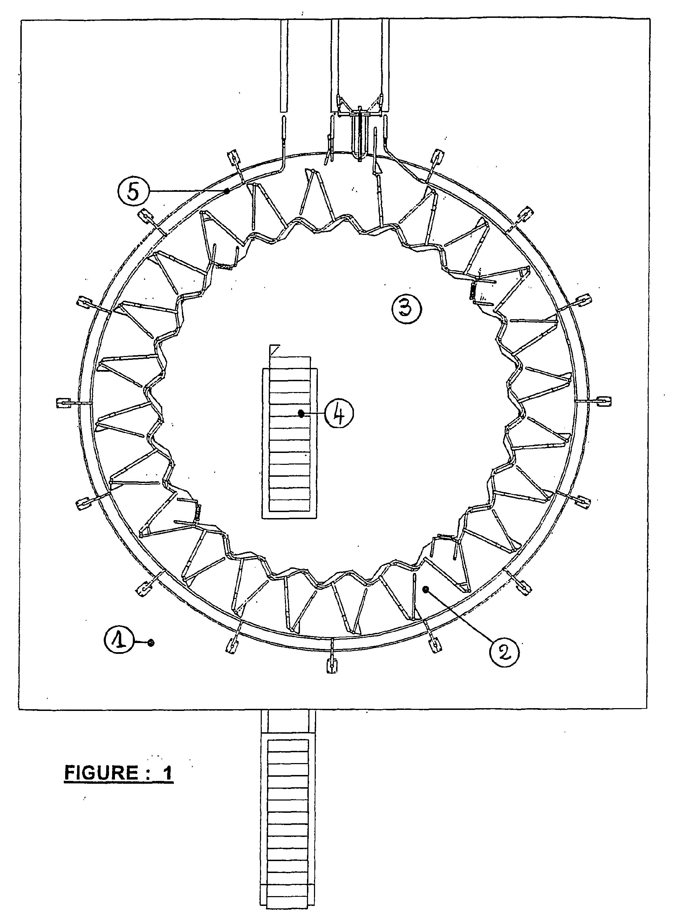

   * FIGURE 1 : Vue de dessus du Manége de traite actuel avec la Lice Avant (5) obstruant le passage d'homme, ainsi que le passage souterrain (4)cité ci-dessus.

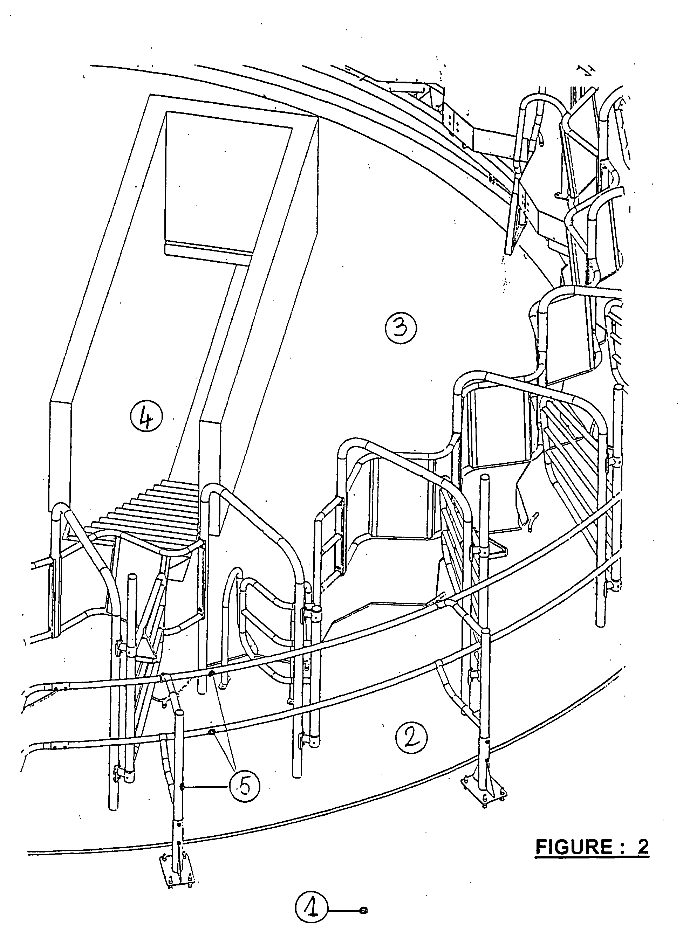

   * FIGURE 2 : Vue générale actuelle de l'extérieure du Manège montrant le passage souterrain (4) dans la fosse de traite (3) ainsi que la Lice Avant (5) située sur le pourtour de la plate-forme, fixée sur la dalle extérieure (1), celle-ci étant de même niveau que la plate-forme (2).
   * FIGURE 3 : Vue de dessus du manège de traite, selon l'invention, avec indication sur la plate-forme (2), des quatre points de passage d'homme (6, 7, 8 & 9) de la fosse (3) vers l'extérieure du manège (1) ainsi que l'aménagement de ces 4 passages sans obstacle.

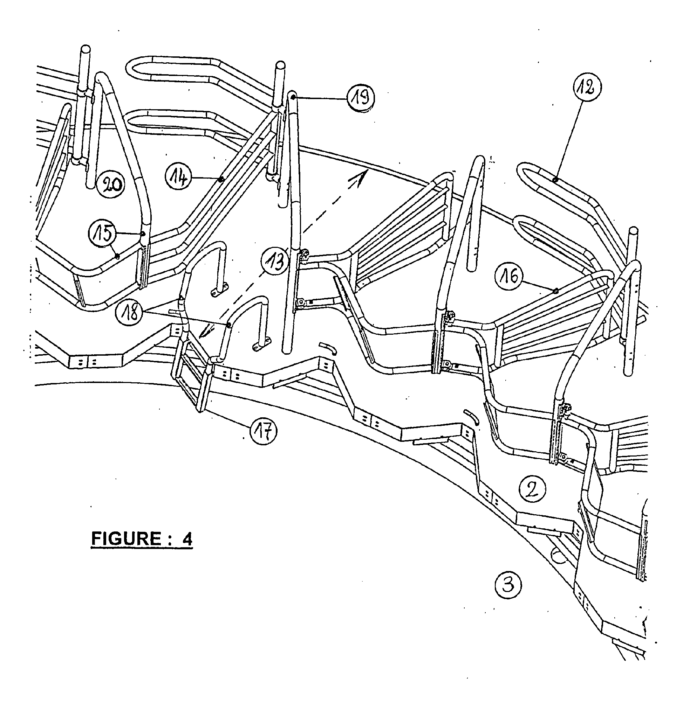

   * FIGURE 4 : Vue générale, selon l'invention, d'un passage d'homme (13) aménagé sur une plate-forme circulaire tournante (2).

   Sur la plupart des Manèges de traite construit à ce jour, on trouve une Lice Avant (5) composée de 2 barres circulaires, fixées sur la dalle extérieure (1) à la plate-forme tournante, superposées à environ 750 et 1300mm au-dessus de cette plate-forme (2), avec un passage ouvert pour l'entrée (11) et la sortie (10) des bovins, devant la plate-forme de chargement des animaux. Cette double barre (5) bloque les vaches en position de traite (leur tête se situant entre les 2 barres), mais, est aussi un obstacle à franchir, pour l'accès à la plate-forme (2), qui ne peut se faire qu'en passant sous ou entre les barres.
   L'intérêt de l'invention, comme définie dans la revendication 1, réside dans la suppression de cette Lice Avant (5) afin de ne pas encombrer le passage (13) du ou des trayeurs ainsi que de toute personne ayant besoin de se rendre dans la fosse de traite (3). Elle a donc été remplacée par une Porte-lice (12) à ouverture individuelle installée sur toutes les stalles de traite, sauf aux endroits ou se situe les passages d'homme (13).
   Le passage d'homme (13) en lui-même est sécurisé par le montage sur un coté, d'une barrière bas-flanc fixe (14), boulonnée entre 2 arches installées pour supporter les stalles de traite, allant de la contention arrière (15) de la vache vers l'arche suivante (19), support de la Porte-Lice (12) et, sur l'autre coté, d'une barrière ouvrante (16), permettant en position ouverte, l'entrée des bovins sur la plate-forme (2) au moment du passage du Manège devant le quai d'embarquement (11). Une fois la vache en position de traite dans sa stalle, la barrière se referme sur la vache afin de la bloquer durant la traite, libérant du même coup le passage d'homme (13) de tout obstacle.
   La descente dans la fosse de traite (3) se fait facilement à l'aide d'un escalier ou échelle de fosse type «piscine» (17), avec rampes (18), fixé sur la plate-forme (2). Les rampes (18) permettent de bien se tenir pour passer d'une marche en mouvement de rotation vers un sol fixe et vice-versa, en toute sécurité comme sur un escalier mécanique.

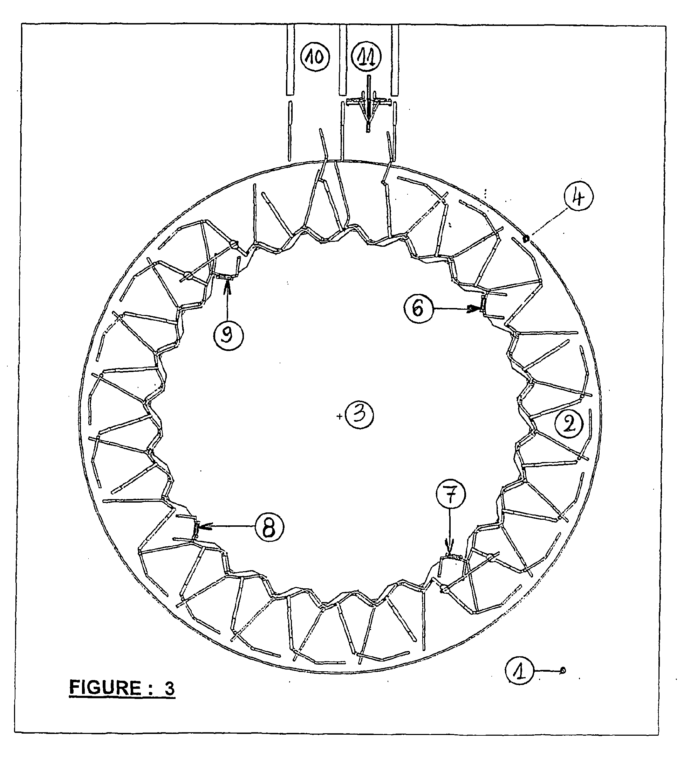

   Sur la figure 3, nous avons positionné 4 passages ( 6, 7, 8 & 9 ) qui dimensionnés, peuvent être remplacés par des stalles de traite (20), dans le cas d'une augmentation fréquente du nombre de vaches à traire ou, pour un gain de temps de traite qui n'avait pas été jugé utile au moment de l'installation du Manège de traite. Ceci nous donne donc une possibilité d'extension du nombre de postes de traite sur le Manége.
   Toutefois, il sera nécessaire de conserver au minimum un passage (13) afin de pouvoir sortir de la fosse de traite. Ces passages seront uniformément répartis sur le pourtour du Manège à 180° pour 2 passages d'homme, à 120° pour 3 passages d'homme et à 90° pour 4 passages d'homme.
   Ce type de passage (13) permet d'accéder rapidement en toute sécurité : soit au parc où sont situées les vaches en attente de la traite, soit à toute autre annexe du bloc-traite.

## Revendications

1. Salle de traite à plate-forme circulaire tournante (2) pour une traite à l'intérieur de cette plate-forme, équipée de stalles (20) permettant une traite sur le coté ou par l'arrière des vaches, dans laquelle chacune des stalles (20) est munie d'une porte-lice (12) à ouverture individuelle et dans laquelle au moins un passage d'homme (13) est prévu sur la plate-forme en lieu et place d'une stalle, dimensionné semblablement à une stalle, sécurisé par une barrière fixe (14) et une barrière ouvrante (16) permettant l'entrée de la vache dans la stalle puis libérant le passage d'homme (13) de tout obstacle ainsi qu'une échelle de fosse (17) facilitant le passage d'homme lors de la descente dans la fosse de traite.

2. Salle de traite à plate-forme circulaire tournante (2), selon la revendication 1, **caractérisée en ce que** la plate-forme (2) est munie de 2 passages d'homme (13) placés en vis à vis sur la plate-forme, soit à 180°.

3. Salle de traite à plate-forme circulaire tournante (2), selon la revendication 1, **caractérisée en ce que** la plate-forme (2) est munie de 3 passages d'homme (13) positionnés uniformément sur le pourtour de la plate-forme, soit à 120° les uns par rapport aux autres.

4. Salle de traite à plate-forme circulaire tournante (2), selon la revendication 1, **caractérisée en ce que** la plate-forme (2) est munie de 4 passages d'homme (13) positionnés uniformément sur le pourtour de la plate-forme, soit à 90° les uns par rapport aux autres.

5. Salle de traite selon l'une ou l'autre des revendications précédentes, **caractérisée en ce que** 1, 2 ou 3 de ces passages d'homme (13) peuvent être transformés en stalle de traite (20).

## Claims

1. Milking parlour circular turntable (2) with internal milking facility, fitted with stalls (20) in which cows can be milked from the side or from behind, in which each of the stalls (20) is provided with an individually openable gate (12) and in which at least one human-sized passageway (13) is provided on the turntable in place of a stall; this passageway is stall-sized and is protected by a stationary barrier (14) and a pivotable barrier (16) enabling the cow to enter the stall (20), whereafter the passageway (13) is cleared of all obstacles, and a pit ladder (17) facilitating access into the milking pit.

2. Milking parlour circular turntable (2), according to claim 1, **characterised in that** the turntable (2) is provided with 2 human-sized passageways (13) placed opposite each other on the turntable, i.e. at 180°.

3. Milking parlour circular turntable (2), according to claim 1, **characterised in that** the turntable (2) is provided with 3 human-sized passageways (13) positioned uniformly around the turntable, i.e. at 120° from each other.

4. Milking parlour circular turntable (2), according to claim 1, **characterised in that** the turntable (2) is provided with 4 human-sized passageways (13) positioned uniformly around the turntable, i.e. at 90° from each other.

5. Milking parlour according to any other of the preceding claims, **characterised in that** 1, 2 or 3 of these human-sized passageways (13) can be converted into milking stalls (20).

## Patentansprüche

1. Melkstand mit runder Drehplattform (2) zum Melken an der Innenseite der Plattform, der mit Melkplätzen (20) ausgestattet ist, die ein Melken an der Seite oder von der Rückseite der Kühe aus ermöglichen, wobei jeder der Melkplätze (20) mit einer Begrenzungspforte (12) mit individueller Öffnung ausgestattet ist und wobei mindestens ein Personendurchgang (13) anstelle und an der Stelle eines Melkplatzes der Plattform angeordnet ist, der ähnlich wie ein Melkplatz dimensioniert ist und durch eine fixe Sperre (14) und eine sich öffnende Sperre (16), die den Zutritt der Kuh in den Melkplatz ermöglicht und anschließend den Personendurchgang (13) von jedwedem Hindernis befreit, sowie eine Grubenleiter (17), die den Personendurchgang beim Abstieg in die Melkgrube erleichtert, gesichert ist.

2. Melkstand mit runder Drehplattform (2) nach Anspruch 1, **dadurch gekennzeichnet, dass** die Plattform (2) mit zwei Personendurchgängen (13) ausgestattet ist, die einander gegenüberliegend an der Plattform, d.h. bei 180°, angeordnet sind.

3. Melkstand mit runder Drehplattform (2) nach Anspruch 1, **dadurch gekennzeichnet, dass** die Plattform (2) mit drei Personendurchgängen (13) ausgestattet ist, die gleichmäßig um den Umfang der Plattform herum, d.h. jeweils bei 120° in Bezug aufeinander, angeordnet sind.

4. Melkstand mit runder Drehplattform (2) nach Anspruch 1, **dadurch gekennzeichnet, dass** die Plattform (2) mit vier Personendurchgängen (13) ausgestattet ist, die gleichmäßig um den Umfang der Plattform herum, d.h. jeweils bei 90° in Bezug aufeinander, angeordnet sind.

5. Melkstand nach einem der vorangegangenen Ansprüche, **dadurch gekennzeichnet, dass** einer, zwei oder drei der Personendurchgänge (13) in Melkplätze (20) umgewandelt werden können.
